# EUROPEAN PATENT SPECIFICATION

(11) **EP 4 411 073 B1**
(45) Date of publication and mention of the grant of the patent: **28.05.2025**
(21) Application number: 23167663.6
(22) Date of filing: 13.04.2023
(51) Int. Cl.: E02D 17/00, E02D 17/18, B25J 9/00, B33Y 10/00, B33Y 30/00, B62D 57/02, B28B 1/00, E02B 3/12, B25J 5/00, B25J 19/00, E02D 17/20, E04G 21/04

(54) **MULTI-FUNCTIONAL CONCRETE 3D PRINTING DEVICE**
MULTIFUNKTIONALE BETON-3D-DRUCKVORRICHTUNG
DISPOSITIF D'IMPRESSION 3D DE BÉTON MULTIFONCTIONNEL

(30) Priority: 03.02.2023 CN 202310099824
(43) Date of publication of application: 07.08.2024
(73) Proprietor: China Three Gorges Corporation, Wuhan, Hubei 430010 (CN); China Three Gorges Construction Engineering Corporation, Beijing 101199 (CN)
(72) Inventor: TAN, Zhiguo, Wuhan, Hubei 430010 (CN); GAO, Peng, Wuhan, Hubei 430010 (CN); ZHOU, Shaowu, Wuhan, Hubei 430010 (CN); DU, Jianguo, Wuhan, Hubei 430010 (CN); CHEN, Xiang, Wuhan, Hubei 430010 (CN); ZHAO, Qiang, Wuhan, Hubei 430010 (CN); WU, Guolin, Wuhan, Hubei 430010 (CN); PENG, Qian, Wuhan, Hubei 430010 (CN)
(74) Representative: Valet Patent Services Limited

(56) References cited:
- IT-A1- 202100 010 091
- JP-A- 2021 142 702
- US-A1- 2020 047 400
- US-B1- 10 920 434

## Description

### TECHNICAL FIELD

The present invention relates to the technical field of 3D printing, in particular to a multi-functional concrete 3D printing device.

### BACKGROUD

The 3D printing technology has the advantages of fast forming speed, lower expense, smaller occupied production space, etc., in the production of structurally complex material members such as concrete, and thus already has exploratory applications in the field of construction, bridges and the like. In general, existing printing is used for model construction in such a way that printing is performed on flat ground or structural members are printed in a factory in advance and then are assembled on site, while there are still application blanks in environments with poor environment adaptability, complex terrains and narrow regions. Today, ramp protection projects (grid beams) are mostly performed manually, and employs a manner of conventional erecting formwork and cast-in-place concrete, resulting in slow construction progress, high resource demands, and lower safety. In fact, prior to the on-site construction process, the bottom of a to-be-printed building is generally not horizontally disposed, resulting in that a 3D printing device cannot print non-horizontal planes such as ramp protection.

The US 10,920434B1 discloses a robotic system having a movable gantry robot for conducting construction operations. The gantry may have an expandable bridge and articulated gantry support legs as well as a support track system holding a gantry robot which may hold one or more implements and peripheral devices. The device can be moved by propulsion mechanisms, a controller, and one or more geo-positioned control devices to provide position information for the robotic gantry as it moves back and forth along a plurality of work sites. The robotic gantry is connected to a power supply system. The controller is automated, self-navigating, and activates, deactivates, and/or changes the operation of the propulsion mechanisms, and deploys, retracts, activates, deactivates, and/or changes the operation of one or more of the construction implements.

### SUMMARY

Accordingly, the technical problem to be solved by the present invention is to overcome the defects that 3D printing devices in the prior art cannot print non-horizontal-plane, non-prefabricated foundation ground such as ramp protection, thereby providing a multi-functional concrete 3D printing device.

In order to solve the above problem, the present invention provides, according to claim 1, a multi-functional concrete 3D printing device.

Optionally, the angle adjusting member is a spherical plain bearing.

Optionally, a side wall of the nozzle is fixedly provided with an altimeter that is in communication connection with the controller.

Optionally, the print carriage includes at least two transverse beams and two longitudinal beams, and is provided with a camera and the nozzle. The transverse beams and the longitudinal beams enclose a truss. Transverse power members are disposed on the transverse beams, and longitudinal power members are disposed on the longitudinal beams. The camera is disposed towards a spraying direction of the nozzle, and the controller is in communication connection with the camera. Caterpillar bands or slide rails are paved on the transverse beams and the longitudinal beams. The transverse power members and the longitudinal power members are respectively in communication connection with the controller.

Optionally, the multi-functional concrete 3D printing device further includes a feeding structure that includes a concrete tank, a delivery pump and a feeding tube. The concrete tank and the delivery pump are disposed on a side surface of the control chamber. The feeding tube is disposed at an output end of the delivery pump, goes by the control chamber and the arm lever in sequence and then is connected to the nozzle. The delivery pump is in communication connection with the controller.

Optionally, the multi-functional concrete 3D printing device further includes a power structure disposed at an end of the control chamber facing away from the arm lever, and a walking structure disposed below the control chamber. The power structure includes an actuator and a counterweight case. The walking structure is rotationally connected to the control chamber.

Optionally, the multi-functional concrete 3D printing device further includes a nozzle yaw power shaft that is driven by the nozzle yaw power member to rotate in a yaw fixed shaft sleeve. The nozzle yaw power shaft is fixedly connected to a yaw movable sleeve, and the yaw movable sleeve is fixedly connected to a nozzle support and the nozzle below the nozzle support. The nozzle yaw power shaft drives the nozzle support and the nozzle to swing when in rotation. The angle rotating member is fixed onto a nozzle base by a nozzle base support. The nozzle base drives the nozzle to slide linearly on the transverse beams. The angle rotating member drives a rotating shaft support and the nozzle below the rotating shaft support to rotate while driving a rotating shaft to rotate, thereby implementing movement of the nozzle in respective dimensions.

A use method of a multi-functional concrete 3D printing device, according to an embodiment not covered by the present invention, is implemented as follows. A controller controls individual legs to extend, and the individual legs are extended by set lengths calculated by the controller upon contact with a bottom surface of a to-be-printed concrete model. An angle adjusting member drives a print carriage to rotate, such that the print carriage maintains a printing angle with the ground of the to-be-printed concrete model. Subsequently, the controller controls a nozzle yaw power member and an angle rotating member to rotate, and adjusts the angle of a nozzle, thereby forming a desired concrete printing angle through joint control.

Optionally, the use method includes the following steps:
(1) selection of a printing model and parameters: inputting parameters such as coordinates of a to-be-printed ramp region, an inclination angle, etc., into a controller before printing, and selecting the pattern of a to-be-printed grid beam in a control program;
(2) device in position and preparation: stopping the device in a region where concrete is to be printed, controlling, by an operator, a printing arm to extend to a to-be-printed region, meanwhile, rotating the print carriage to select a rotating angle of the print carriage in a preset control program according to a size and a length-width ratio of the to-be-printed region so as to match a long-side printing manner, a short-side printing manner or an oblique printing manner, etc., thereby adapting to ramps in various angles and ramp concrete in various patterns and shapes; presetting an initial print sideline in the control program of the system, that is, selecting one side of the print carriage to be aligned with the initial print sideline, and allowing the program to automatically control the print carriage to move to be aligned with the initial print sideline; or employing a manual alignment manner, that is, disposing cameras at appropriate positions of the print carriage and an arm lever, allowing an operator to observe or the cameras to show that a print alignment line is aligned with a reference print boundary by means of a video signal in the control chamber observed by an operator or introduced by a camera on a boom, thereby ensuring the alignment and proper engagement between concrete printed each time;
(3) printing process and adjustment:
   upon confirming that the print carriage is aligned with the to-be-printed region, in the case that it is ensured that the print carriage remains parallel to the ground or forms a preset angle with the ground, controlling, by the control system, legs at four corners to extend by respective calculated lengths by measurement through altimeters disposed on the print carriage, and adjusting the print carriage to be parallel to or to form a preset angle with the ground where concrete is to be printed, thereby printing planar or curved concrete; allowing the print carriage to be reliably supported by the legs to prevent the printing quality from being affected by the vibrations caused by feeding and printing in the printing process, thereby ensuring the printing quality; when the individual legs are stressed in contact with the ground, performing rotation and adaptive adjustment on a spherical plain bearing at the joint of the arm lever and the print carriage under the retroaction of the supporting force of the legs to the ground, thereby achieving the adaptive leveling of the angle of the print carriage;
   setting a print path and selecting parameters such as the pattern of the grid beam, ramp angle, cross section of the grid beam in advance in a printing control system of the control chamber; prearranging a plurality of altimeters on the print carriage to make an overall height measurement of the ground within the region of the print carriage at this time, transmitting data to the control system for comparison to confirm actual heights of individual points that need to be printed on the uneven ground; planning a concrete discharging rate and an operating speed of the nozzle at the individual points on the print path systematically and accurately in conjunction with the above settings in the control program such that under the condition that an original ground is lower than that as planned by an original system, the nozzle can print more concrete at this point by accelerating the concrete discharging rate and decreasing the movement speed of the nozzle to achieve the originally designed concrete print height, and vice versa; or allowing a compassion with the height of concrete that needs to be printed at this point and is preset by the system, and then determining and correcting whether the height of the printed concrete meets design requirements, thereby ensuring that the printed concrete surfaces are at the same height in the case of printing of the uneven ground or curved concrete with unequal heights is printed according to the preset requirements;
(4) cycle printing: after completion of printing in this region, moving a walking structure of the device, then allowing the print carriage to repeat the above cycle after being aligned with an alignment line preset in the controller or aligned with an edge of a last concrete module printed, and r;
(5) skew adjustment and correction of the printing process: setting a three-dimensional simulated grid beam in a preset program in the control chamber, automatically fitting the grid beam in the preset program with an actually printed grid beam by the recognition function of the cameras, performing prompt when differences occur, and correcting, making up and improving the device for subsequent printing;
(6) adjustment in a curved concrete printing process: allowing 4 legs on the print carriage to slightly movement or extend by different lengths rapidly at the individual points based on the pre-planned path on the premise of continuous printing according to the values pre-calculated by the control program during the printing, then forming an angle between the print carriage and the to-be-printed printed concrete, and thus reserving an unequal-height space for the printed concrete, thereby facilitating the printing of the curved concrete;
(7) after use, slewing and retracting the print carriage to a rear part of a moving platform of the device by joint folding with the arm lever to facilitate transportation; and when the print carriage is large, disposing a plurality of towing wheels at a tail part of the print carriage, thereby realizing the convenience that the towing wheels are in contact with the ground after folding, and thus the print carriage performs long-distance transportation together with the device along with the movement of the moving platform of the device.

### BRIEF DESCRIPTION OF THE DRAWINGS

In order to illustrate more clearly the specific embodiments of the present invention or the technical solutions in the prior art, the drawings required for description of the specific embodiments or the prior art will be briefly described below. It will be apparent that the drawings in the following description are some embodiments of the present invention, and a person of ordinary skill in the art can obtain other drawings based on these drawings without inventive step.
Fig. 1 is a top view of a 3D printing device provided in an embodiment of the present invention;
Fig. 2 is a schematic structural view of a nozzle of a 3D printing device provided in an embodiment of the present invention;
Fig. 3 is a schematic structural diagram showing connection of an arm lever and a printing structure of a 3D printing device provided in an embodiment of the present invention; and
Fig. 4 is a schematic diagram showing a printing operation of a 3D printing device print provided in an embodiment of the present invention.

Reference numerals: 1. caterpillar band; 2. walking structure; 3. control chamber; 4. delivery pump; 5. concrete tank; 6. actuator; 7. counterweight case; 8. arm lever; 9. planetary gear; 10. slewing gear; 11. longitudinal beam; 12. leg; 13. transverse power member; 14. connecting line; 15. transverse beam; 16. nozzle; 17. reinforcing rib; 18. camera; 19. feeding tube; 20. spray power member; 21. material inlet; 22. altimeter; 23. rotating shaft support; 24. nozzle base support; 25. nozzle base; 26. angle rotating member; 27. rotating shaft; 28. yaw fixed sleeve; 29. yaw movable sleeve; 30. nozzle support; 31. nozzle yaw power member; 32. nozzle yaw power shaft.

### DETAILED DESCRIPTION

The technical solutions of the present invention will now be clearly and fully described in conjunction with the drawings, and it will be apparent that the described embodiments are some, but not all, embodiments of the present invention. Based on the embodiments of the present invention, all other embodiments according to the claims are within the scope of protection of the present invention.

In the description of the present invention, it should be noted that, the orientation or position relation indicated by terms "center", "upper", "lower", "left", "right", "vertical", "horizontal", "inner", "outer" and the like is based on the orientation or position relation shown in the drawings. The terms are only for describing the present invention and simplifying the description, rather than indicating or implying that the device or element referred to must have a specific orientation and be constructed and operated in a specific orientation, and therefore cannot be understood as a limitation of the present invention. Moreover, the terms "first", "second", "third" are used for descriptive purposes only and cannot be construed to indicate or imply relative importance.

Throughout the description of the present invention, it is to be noted that, unless expressly specified and defined otherwise, the terms "mount", "link" and "connect" should be broadly understood, For example, it can be fixed connection, detachable connection or integrated connection; it can be mechanical connection or electrical connection; and it can be direct connection or indirect connection through intermediate media, and may be internal connection of two elements. A person of ordinary skill in the art may understand the specific meaning of the above terms in the present invention according to specific situations.

Furthermore, technical features involved in different embodiments of the present invention described below can be combined with each other, according to the claims.

### Embodiment 1

The present invention provides a multi-functional concrete 3D printing device, including: a control structure, including a control chamber 3 and arm levers 8 which are in transmission connection; a printing structure, being disposed at an end of the arm lever 8 away from the control chamber 3, being connected to the arm lever 8, and including a print carriage, a nozzle 16 disposed on the print carriage, and at least one adjustable leg 12 disposed on the print carriage, wherein an angle adjusting member is disposed between the print carriage and the arm lever 8, the nozzle 16 is provided with a nozzle yaw power member 31 and an angle rotating member 26, the controller controls the extension length of the leg 12 to cause the angle adjusting member to drive the print carriage to rotate, and the nozzle 16 sprays from different angles by rotation of the print carriage, and rotation of the nozzle yaw power member 31 and the angle rotating member 26. When in a printing state, the controller controls the extension length of the legs 12 to maintain a spatial height with the ground required for printing, and then the print carriage is adjusted by the angle adjusting member for rotation, such that the nozzle 16 is driven to rotate by the rotation of the print carriage. Meanwhile, the controller controls the nozzle yaw power member 31 and the angle rotating member 26 to rotate, and the nozzle 16 adapts to different plane angles during construction on site so as to perform non-horizontal plane printing under the joint action of an print carriage, the nozzle yaw power member 31 and the angle rotating member 26.

### Embodiment 2

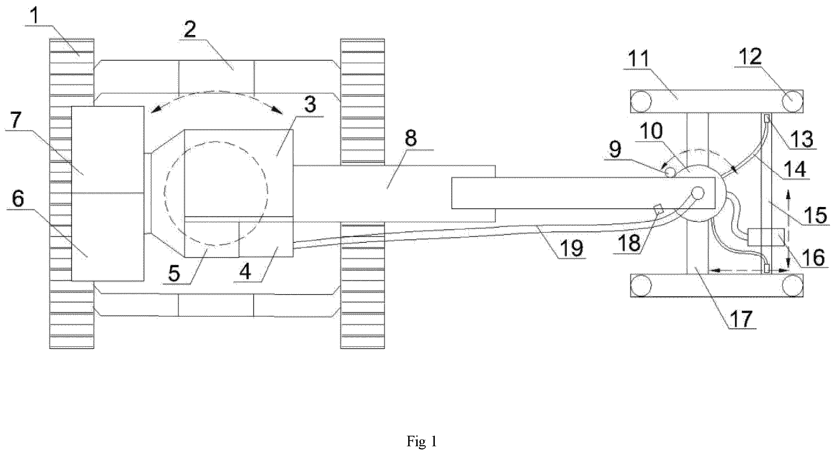

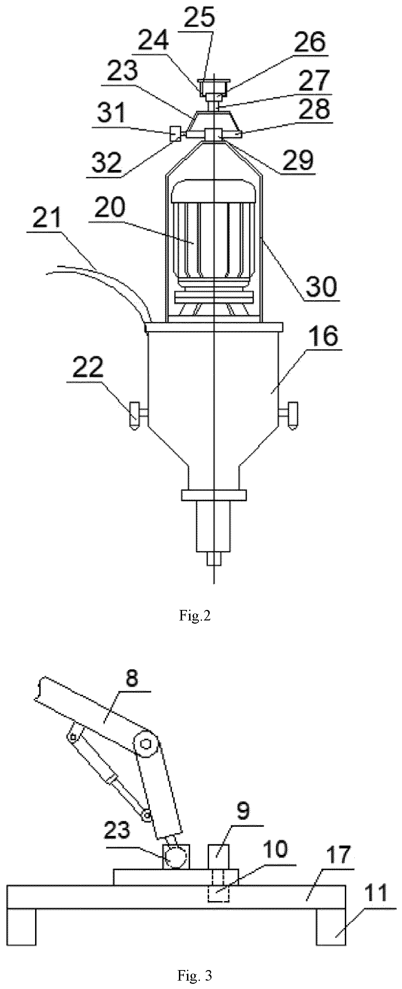

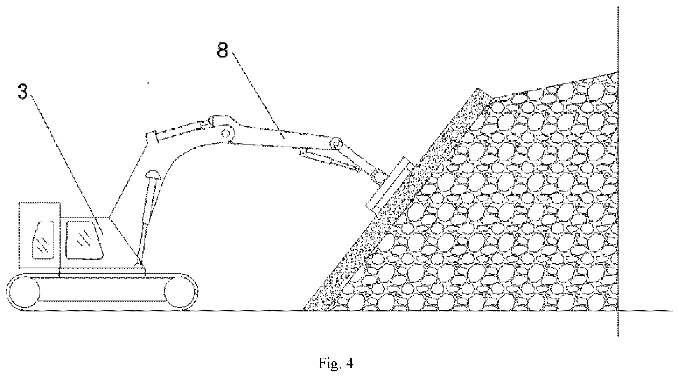

A specific embodiment of a 3D printing device as shown in Figs. 1-4 includes a control structure including a control chamber 3 and an arm lever 8, a printing structure disposed on an end of the arm lever 8 away from the control chamber 3, a walking structure 2 disposed below the control chamber 3, and a power structure disposed at an end of the control chamber 3 facing away from the arm lever 8. The arm lever 8 is provided as a multi-section boom. The relative rotation between the multiple sections of the boom is ensured by means of pins and bearings, and the relative rotation between the adjacent sections of the boom is achieved by oil cylinders or steel wire ropes.

As shown in Fig. 1, the printing structure includes a print carriage, and a nozzle 16 disposed on the print carriage. For angular rotation of the print carriage, an angle adjusting member is disposed on the print carriage. Specifically, the angle adjusting member is a spherical plain bearing. To drive the print carriage to rotate, a slewing structure is disposed between the print carriage and the arm lever 8, and includes a planetary gear 9 disposed on the arm lever 8, a slewing gear 10 disposed on the print carriage, and a slewing power member for driving the planetary gear to rotate, wherein the planetary gear 9 is meshed with the slewing gear 10. Specifically, the slewing power member is preferably a servo motor or other appropriate types of motors. As shown in Fig.1, the print carriage includes at least two transverse beams 15 and two longitudinal beams 11. The transverse beams 15 and the longitudinal beams 11 enclose a truss. Transverse power members 13 are disposed on the transverse beams 15, and longitudinal power members are disposed on the longitudinal beams 11. The transverse power members 13 drive the nozzle 16 to move transversely, and the longitudinal power members drive the transverse beams 15 to move longitudinally.

Specifically, the transverse power members 13 and the longitudinal power members are preferably servo motors or other appropriate types of motors. To reinforce the connection between the transverse beams 15 and the arm lever 8, a reinforcing rib 17 is disposed at the connection position of the transverse beams 15 and the arm lever 8. To facilitate support and adjustment of the angle of the print carriage, two ends of each longitudinal beam 11 are respectively provided with at least one adjustable leg 12 that is used to adjust the relative height and angle of the print carriage to the ground, such that the print carriage can adapt to to-be-printed concrete models in different shapes and at different angles, to meet different construction needs. Specifically, the leg 12 is a hydraulically stretchable leg. Meanwhile, the leg 12 may also provide good support for the print carriage, which avoids impacting printing quality during printing due to feeding or vibration, and ensures that the print carriage is parallel to or forms a preset angle with the surface of to-be-printed concrete, thereby printing planar or curved concrete, and ensuring printing quality. To capture printed images in real time, an end of the arm lever 8 close to the print carriage is provided with a camera 18 that is disposed towards a spraying direction of the nozzle 16. To measure the height of the print carriage, a plurality of altimeters 22 are also disposed on a circumferential side wall of the nozzle 16. The respective altimeters 22 measure the heights of the ground and the heights of printed concrete in different directions, and data is fed back to the control chamber 3 for comparison to confirm actual heights of individual points that need to be printed on the uneven ground and whether the height of the printed concrete meets the design requirements.

To control the flow rate sprayed by the nozzle 16, a spray power member 20 is disposed at the nozzle 16. Specifically, the spray power member 20 is preferably a servo motor or other appropriate types of motors. To measure the angle between the print carriage and a horizontal plane, the 3D printing device further includes an angle meter.

To facilitate rotation of the nozzle 16, the nozzle yaw power member 31 drives a nozzle yaw power shaft 32 to rotate in a yaw fixed shaft sleeve 28, and the nozzle yaw power shaft 32 is fixedly connected to a yaw movable sleeve 29 that is fixedly connected to a nozzle support 30 and the nozzle and associated mechanisms below the nozzle support 30. The nozzle yaw power shaft 32 drives the nozzle support 30 and the nozzle 16 to swing when in rotation. The angle rotating member 26 is fixed onto a nozzle base 25 by a nozzle base support 24. The nozzle base 25 drives the nozzle and associated mechanisms to slide linearly on the transverse beams 15 and rails. The angle rotating member 26 drives a rotating shaft support 23 and the nozzle 16 below the rotating shaft support 23 to rotate while driving a rotating shaft 27 to rotate, thereby implementing movement of the nozzle in respective dimensions.

To facilitate control, a controller is disposed in the control chamber 3, wherein the controller is in communication connection with the slewing power member, the transverse power members 13, the longitudinal power members, the spray power member 20, the nozzle yaw power member 31, the angle rotating member 26, the camera 18, the altimeters 22, the angle meter, the nozzle 16 and the legs 12, respectively. It should be noted that connecting lines 14 pass through holes in the angle adjusting member to be connected to structures of various parts of the print carriage. To print different trajectories, patterns of grid beams, ramp angles, cross sections of grid beams or the like are set in a preset program in the controller, and three-dimensional simulated grid beams are preset in the controller. Parameters such as coordinates of a to-be-printed ramp region, an inclination angle, etc., are input into the controller before printing, and the pattern of a to-be-printed grid beam is selected in the control program. If there is no pattern of the to-be-printed grid beam in a pattern library, a new pattern of the grid beam is formed by setting specific parameters.

To power the control chamber 3, the 3D printing device further includes a power structure that is disposed at an end of the control chamber 3 away from the arm lever 8. The power structure includes an actuator 6 and a counterweight case 7, wherein the actuator 6 is in communication connection with the controller to achieve multi-structure ganged control by the controller. It should be noted that modifications can be made on the basis of existing mature construction equipment platforms, such that the power structure provides power for the entire device.

To provide concrete, the 3D printing device further includes a feeding structure that includes a concrete tank 5, a delivery pump 4 and a feeding tube 19. The concrete tank 5 and the delivery pump 4 are disposed on the side surface of the control chamber 3. The feeding tube 19 is disposed at an output end of the delivery pump 4, goes by the arm lever 8 and then is in pipeline connection with a material inlet 21 the nozzle 16. The delivery pump 4 is in communication connection with the controller. Specifically, the delivery pump 4 is a screw pump.

In particular use, on-site personnel operates the controller in the control chamber 3 to control caterpillar bands 1 of the walking structure 2 to a to-be-printed position, and to control an arm head to extend to the to-be-printed ground which is divided into a plurality of to-be-printed regions. Meanwhile, a long-side printing manner, a short-side printing manner or an oblique printing manner is selected by rotating the print carriage by the slewing power member according to a size and a length-width ratio of the to-be-printed region, thereby adapting to ramps in various angles and ramp concrete in various patterns and shapes. An initial print sideline is preset in the controller, one side of the print carriage is selected to be aligned with the initial print sideline, and a program can automatically control the print carriage to move to be aligned with the initial print sideline. The on-site personnel observes video signals captured by the camera 18 and stops the rotation of the print carriage after the edge of the print carriage is aligned with the line of the to-be-printed region, and the controller plans printing lines.

After confirming that the print carriage is aligned with the to-be-printed region, the legs 12 at four corners of the print carriage extend out. In the case that it is ensured that the print carriage remains parallel to the ground or forms a preset angle with the ground, the control system controls the legs 12 at four corners to extend by respective calculated lengths by measurement made by the altimeters 22 disposed on the print carriage, so as to adjust the print carriage to be parallel to or to form the preset angle with the ground where concrete is to be printed, thereby printing planar or curved concrete. When an oil cylinder of each leg 12 is stressed when in contact with the ground, the spherical plain bearing at the connection position of the arm lever 8 and the print carriage performs rotation and adaptive adjustment under the retroaction of the supporting force of oil cylinders of the legs 12 to the ground, thereby achieving the adaptive leveling of the angle of the print carriage. Such a structure design is simple, efficient and practical, without the need of design and installation of a multi-dimensional adjustment mechanism at the spherical plain bearing. A plurality of altimeters 22 prearranged on the print carriage are used to make an overall height measurement of the ground within the region of the print carriage at this time. Data is transmitted to the control system for comparison to confirm actual heights of individual points that need to be printed on the uneven ground. A concrete discharging rate and an operating speed of the nozzle 16 at the individual points on the print path systematically and accurately in conjunction with the above settings in the control program such that if an original ground is lower than that as planned by an original system, the nozzle 16 can print more concrete at this point by accelerating the concrete discharging rate and decreasing the movement speed of the nozzle 16 to achieve the originally designed concrete print height, and vice versa. The compassion is performed with the height of concrete that needs to be printed at this point and is preset by the system after detection, and then whether the height of the printed concrete meets design requirements is determined and corrected. It is thereby ensured that the printed concrete surfaces are at the same height in the case of printing of the uneven ground, or curved concrete with unequal heights is printed according to the preset requirements.

After preparation, the controller starts the delivery pump 4, and drives the transverse beam 15 power members and the longitudinal beam 11 power members to move to drive the nozzle 16 to spray concrete slurry according to a previously planned path for printing. Meanwhile, the altimeters 22 perform height measurement, and the measured data is transmitted to the controller for comparison to confirm the concave-convex shape of the surfaces at different positions on the ground. The print carriage remains parallel to or forms a preset angle with the surface of the to-be-printed concrete, thereby controlling the nozzle 16 to spray concrete slurry with different flow rates, and controlling the legs 12 to be slightly stretch to ensure an optimal spraying angle of the nozzle 16.

When the to-be-printed region is printed, the next to-be-printed region continues, the print carriage repeats the above cycle after being aligned with the alignment line preset in the system or aligned with an edge of a last concrete module printed, and reciprocates until the entire printing operation of the to-be-printed ground is finished. It should be noted that the three-dimensional simulated grid preset in the controller is automatically fitted with the grid beam captured by the camera to perform prompt when differences occur, and correction, making up and improvement are performed for subsequent printing.

A control system includes a device movement platform control system, a feeding control system, a printing control system, and the like. The control system can perform on-site control, or perform remote control. The control system performs organizational control on the device movement platform control system, the feeding control system and the printing control system through advanced design, built-in software and hardware planning.

Notably, when a curved or ramp concrete model needs to be printed, an angle value of the print carriage measured by the angle meter is transferred to the controller during printing, the individual legs 12 of the print carriage are adjusted to extend by unequal lengths based on the values calculated by the controller, and stretch by different lengths rapidly at the individual points based on the pre-planned path on the premise of continuous printing, such that an angle is formed between the print carriage and the to-be-printed printed ground, and thus an unequal-height space is reserved for the printed concrete, thereby facilitating the printing of the curved or ramp concrete. The legs 12 may provide reliable support of the print carriage, which prevents the printing quality from being affected by the vibrations caused by feeding and printing in the printing process, thereby ensuring the printing quality. When the individual legs 12 are stressed when in contact with the ground, the angle adjusting member at the connection position of the arm lever and the print carriage performs rotation and adaptive adjustment under the retroaction of the supporting force of the legs 12 to the ground, thereby achieving the adaptive leveling of the angle of the print carriage. In the whole process, the angle adjusting member has the advantages of simplicity, efficiency and practicability, without the need of design and installation of a multi-dimensional adjustment mechanism. When printing is finished, a printing arm of the printing device is retracted and folded, and is retracted to the rear part of the device to facilitate transport. When the print carriage is large, a plurality of towing wheels may be disposed at a tail part to facilitate contact of the towing wheels with the ground after folding, to collectively perform long-distance transportation of the device as the platform walks. By way of the specific implementation described above, the printing device can print grid beams in varying shapes, for example, regular grid beams having a uniform cross section shape or non-regular grid beams all can be printed well.

The multi-functional concrete 3D printing device provided by the present invention has the following advantages: (1) With the parallelism measurement and adjustment system, the problem of low 3D printing accuracy is solved by the connection of the legs 12, the altimeters 22 and the controller, and high-accuracy printing is achieved, so that the quality of the concrete print is guaranteed. (2) The degree of automation is high. With the collaborative work of the individual structures from 3D printed concrete production to precise positioning of the print, the controller plans the print path of the model in advance to perform dynamic adjustment in printing different concrete structures so as to achieve automation, and also controls the spraying amount of concrete slurry from the nozzle 16 based on the heights measured the altimeters 22. (3) The versatility is strong. The 3D printing device is applicable to printing of concrete models in different shapes. An operator only need to monitor printing data in real time after the 3D printing device is started, ensuring the health of the operator. (4) The overall structure is compact and simple. The 3D printing device can adapt to different work platforms and sites, read relevant printing data in real time, is located at relevant positions, and has abundant structures and functions. (5) The working efficiency is high: the cooperative work of the print carriage and the controller is achieved to improve the working quality; and the print carriage freely moves in the printing region, so that the working efficiency is obviously improved. (6) A positioner reads the relevant data of the printing region in real time to ensure the printing effect.

As an alternative embodiment, the angle adjusting member may also be a round ball.

As an alternative embodiment, the delivery pump 4 may also be a gear pump or other types of pumps.

As an alternative embodiment, the legs 12 are in other stretchable forms, such as barometric stretchable legs, and the legs 12 may also be manually adjusted.

As an alternative embodiment, the print carriage may also be subjected to manual printing under the control of the operator.

As an alternative embodiment, four sides of the print carriage may also be provided with a print alignment line, and the position the print alignment line is photographed by the camera, and is transferred to the controller. An observer observes or a display screen in the control chamber shows the positions of the print alignment line and a reference print boundary, and enables the print alignment line to be aligned with the reference print boundary, thereby ensuring the alignment and proper engagement between concrete printed each time.

To solve the problems faced by the application of 3D concrete printing technology described above in complex geographical conditions such as ramp protection, there is a need for a 3D concrete printing system with good economy, high applicability and high working efficiency. The 3D printing device is applicable to numerous banded concrete printing, such as concrete grid beams, concrete barriers, concrete enclosures, etc., in various types of engineering construction projects with complex terrain conditions, is an intelligent, automated, economical 3D printing system with high accuracy and environmental adaptability for the above printing. The applicability and practicability of the device are comprehensively improved to achieve the working efficiency of 3D concrete printing under complex geographical conditions by the connection of the boom structure and the nozzle with the slewing and bi-directional movement mechanisms with assistance of the height measurement and calibration device and the corresponding control system.

Obviously, the above embodiments are examples only for clear description, rather than limiting the embodiments. A person of ordinary skill in the art can make other variations or modifications in different forms based on the claims.

## Claims

1. A multi-functional concrete 3D printing device, comprising:
a control structure, comprising a control chamber (3) and arm levers (8), wherein relative rotation between the arm levers (8) is ensured by pins and bearings, relative movement between the arm levers (8) is achieved by oil cylinders or steel wire ropes, and a controller of the control chamber (3) is in transmission connection with the arm levers (8) to control the action of the arm levers (8); and
a printing structure, being disposed at an end of the arm levers (8) away from the control chamber (3), being connected to the arm lever (8) at the end of said arm levers (8), and comprising a print carriage, a nozzle (16) disposed on the print carriage, and at least one adjustable leg (12) disposed on the print carriage, wherein an angle adjusting member is disposed between the print carriage and the arm lever (8), the nozzle (16) is provided with an angle rotating member (26) and a nozzle yaw power member (31), the controller controls the extension length of the leg (12) to cause the angle adjusting member to drive the print carriage to rotate, and the nozzle (16) sprays from different angles by rotation of the print carriage, and rotation of the nozzle yaw power member (31) and the angle rotating member (26):
**characterized in that**, a slewing structure is disposed between the print carriage and the arm lever (8), and comprises a planetary gear (9) disposed on the arm lever (8) and a slewing gear (10) disposed on the print carriage, wherein the planetary gear (9) is meshed with the slewing gear (10), and the slewing structure is in communication connection with the controller.

2. The multi-functional concrete 3D printing device of claim 1, **characterized in that**, the angle adjusting member is a spherical plain bearing.

3. The multi-functional concrete 3D printing device of claim 1, **characterized in that**, a side wall of the nozzle (16) is fixedly provided with an altimeter that is in communication connection with the controller.

4. The multi-functional concrete 3D printing device of claim 1, **characterized in that**, the print carriage comprises at least two transverse beams (15) and two longitudinal beams (11), and is provided with a camera (18) and the nozzle (16); the transverse beams (15) and the longitudinal beams (11) enclose a truss; transverse power members (13) are disposed on the transverse beams (15), and longitudinal power members are disposed on the longitudinal beams (11); the camera (18) is disposed towards a spraying direction of the nozzle (16), and the controller is in communication connection with the camera (18); caterpillar bands or slide rails are paved on the transverse beams (15) and the longitudinal beams (11); and the transverse power members (13) and the longitudinal power members are respectively in communication connection with the controller.

5. The multi-functional concrete 3D printing device of claim 1, **characterized by** comprising a feeding structure that comprises a concrete tank (5), a delivery pump (4) and a feeding tube (19), wherein the concrete tank (5) and the delivery pump (4) are disposed on a side surface of the control chamber (3); the feeding tube (19) is disposed at an output end of the delivery pump (4), goes by the arm lever (8) and then is connected to the nozzle (16); and the delivery pump (4) is in communication connection with the controller.

6. The multi-functional concrete 3D printing device according to claim 5, **characterized by** further comprising a power structure disposed at an end of the control chamber (3) facing away from the arm lever (8), and a walking structure (2) disposed below the control chamber, wherein the power structure comprises an actuator (6) and a counterweight case (7); and the walking structure (2) is rotationally connected to the control chamber (3).

7. The multi-functional concrete 3D printing device of claim 6, **characterized by** comprising a nozzle yaw power shaft (32) that is driven by the nozzle yaw power member (31) to rotate in a yaw fixed shaft sleeve (28), wherein the nozzle yaw power shaft (32) is fixedly connected to a yaw movable sleeve (29), the yaw movable sleeve (29) is fixedly connected to a nozzle support (30) and the nozzle below the nozzle support (30); the nozzle yaw power shaft (32) drives the nozzle support (30) and the nozzle (16) to swing when in rotation; the angle rotating member (26) is fixed onto a nozzle base (25) by a nozzle base support (24); the nozzle base (25) drives the nozzle and associated mechanisms to slide linearly on the transverse beams (15); the angle rotating member (26) drives a rotating shaft support (23) and the nozzle (16) below the rotating shaft support (23) to rotate while driving a rotating shaft (27) to rotate, thereby implementing movement of the nozzle in respective dimensions.

## Patentansprüche

1. A multifunktionale Beton 3D Druckvorrichtung, bestehend aus:
eine Steuerstruktur, bestehend aus einer Steuerkammer (3) und Armhebeln (8), wobei die relative Rotation zwischen den Armhebeln (8) durch Stifte und Lager sichergestellt wird, die Relativbewegung zwischen den Armhebeln (8) durch Ölzylinder oder Stahlseile erreicht wird und eine Steuerung der Steuerkammer (3) in Übertragungsverbindung mit den Armhebeln (8) zur Steuerung der Wirkung der Armhebel (8) steht; und
eine Druckkonstruktion, die an einem Ende der Armhebel (8) von der Steuerkammer entfemt angeordnet ist (3), mit dem Armhebel (8) am Ende dieser Armhebel (8) verbunden ist,
und bestehend aus einem Druckwagen, einer Düse (16), die auf dem Druckwagen angeordnet ist, und mindestens einem verstellbaren Bein (12), das auf dem Druckwagen angeordnet ist, wobei zwischen dem Druckwagen und dem Armhebel ein Winkelverstellelement angeordnet ist (8), die Düse (16) mit einem Winkeldrehelement (26) und einem Düsen-Gier-Antriebselement (31) versehen ist, steuert die Steuerung die Verlängerungslänge des Beins (12), um das Winkeleinstellelement zu veranlassen, den Druckwagen zu drehen, und die Düse (16) sprüht aus verschiedenen Winkeln durch Drehen des Druckwagens, Drehen und Drehen des Giers (31) und Drehen des Druckteils aus verschiedenen Winkeln;
**Dadurch gekennzeichnet, dass** zwischen dem Druckwagen und dem Armhebel (8) eine Schwenkstruktur angeordnet ist und ein auf dem Druckwagen angeordnetes Planetengetriebe (9) und ein auf dem Druckwagen angeordnetes Schwenkgetriebe (10) umfasst, wobei das Planetengetriebe (9) mit dem Schwenkgetriebe (10) verzahnt ist und die Schwenkstruktur in Kommunikationsverbindung mit der Steuerung steht.

2. Die multifunktionale Beton-3D-Druckvorrichtung des Anspruchs 1, **dadurch gekennzeichnet, dass** das Winkeleinstellelement ein Kugelgleitlager ist.

3. Die multifunktionale Beton-3D-Druckvorrichtung des Anspruchs 1, **dadurch gekennzeichnet, dass** eine Seitenwand der Düse (16) fest mit einem Höhenmesser versehen ist, der in Kommunikationsverbindung mit der Steuerung steht.

4. Die multifunktionale Beton-3D-Druckvorrichtung des Anspruchs 1, **dadurch gekennzeichnet, dass** der Druckwagen mindestens zwei Querträger (15) und zwei Längsträger (11) umfasst und mit einer Kamera (18) und der Düse (16) versehen ist; die Querträger (15) und die Längsträger (11) umschließen einen Fachwerk; Querkraftträger (13) sind auf den Querträgem angeordnet (15), Längsleistungsteile auf den Längsträgem (11); die Kamera (18) in Spritzrichtung der Düse angeordnet ist (16), und die Steuerung ist in Kommunikationsverbindung mit der Kamera (18); Raupenbänder oder Gleitschienen sind auf den Querträgem (15) und den Längsträgem (11) gepflastert; und die Querleistungsglieder (13) und die Längsleistungsteile sind jeweils in Kommunikationsverbindung mit der Steuerung.

5. Die multifunktionale Beton-3D-Druckvorrichtung des Anspruchs 1, **gekennzeichnet durch** eine Zuführstruktur, die einen Betontank (5), eine Förderpumpe (4) und ein Zufü hrrohr (19) umfasst, wobei der Betontank (5) und die Förderpumpe (4) auf einer Seitenfläche der Steuerkammer angeordnet sind (3); Das Förderrohr (19) wird am Ausgang der Förderpumpe (4) angeordnet, geht über den Armhebel (8) und wird dann mit der D ü se (16) verbunden; und die Förderpumpe (4) ist in Kommunikationsverbindung mit der Steuerung.

6. Die multifunktionale Beton-3D-Druckvorrichtung gemäß Anspruch 5, **gekennzeichnet durch** eine Kraftstruktur, die an einem Ende der Steuerkammer (3) angeordnet ist, weg vom Armhebel (8), und eine Laufstruktur (2), die unterhalb der Steuerkammer angeordnet ist, wobei die Kraftstruktur einen Aktuator (6) und einen Gegengewichtskoffer (7) umfasst; und die Laufkonstruktion (2) ist drehbar mit der Kontrollkammer verbunden (3).

7. Die multifunktionale Beton-3D-Druckvorrichtung des Anspruchs 6, **gekennzeichnet durch** eine Düsen-Gier-Antriebswelle (32), die **durch** das Düsen-Gier-Antriebselement (31) angetrieben wird, um in einer Gier-festen Wellenhülse zu drehen (28), wobei die Düsen-Gier-Antriebswelle (32) fest mit einer Gier-beweglichen Hülse verbunden ist (29), die Gier-bewegliche Hülse (29) fest mit einer Düsenstütze (30) und die Düse unterhalb der Düsenstütze (30) verbunden ist; die Düsenantriebswelle (32) treibt die D ü senst ü tze (30) und die Düse (16) bei Rotation zum Schwingen an; das Winkeldrehelement (26) wird **durch** eine Düsenbasis (24) auf einem Düsenbasis (25) befestigt; der Düsenboden (25) treibt die Düse und die zugehörigen Mechanismen linear auf den Querträgem an (15); Das Winkeldrehelement (26) treibt eine rotierende Wellenstütze (23) und die Düse (16) unterhalb der rotierenden Wellenstütze (23) an, um sich während des Antriebes einer rotierenden Welle (27) zu drehen, wodurch Bewegung der Düse in den jeweiligen Abmessungen realisiert wird.

## Revendications

1. Dispositif d'impression 3D béton multifonctionnel comprenant: une structure de commande comprenant une chambre de commande (3) et une barre de flèche (8), dans laquelle la rotation relative entre les barres de flèche (7) est assurée par des pions et des paliers, le mouvement relatif entre les barres de flèche (8) étant assuré par un vérin ou un câble d'acier, et le Contrôleur de la Chambre de commande (3) est en liaison cinématique avec la barre de flèche (8) pour commander l'action de la barre de flèche (8); Et une structure d'impression disposée à l'extrémité de la flèche (8) opposée à la Chambre de commande (3), reliée à la flèche (10) à l'extrémité de ladite flèche (9) et comportant un chariot d'impression, une buse (16) prévue sur le chariot d'impression et au moins un pied réglable (12) prévu sur le chariot d'impression, un organe de réglage angulaire étant disposé entre la cage d'impression et la flèche (11), la buse (12) étant munie d'un organe de rotation angulaire (26) et d'un organe d'entraînement en lacet de la buse (31), le Contrôleur commandant La longueur d'extension du pied (11) pour que l'organe de réglage angulaire entraîne le chariot d'impression en rotation, et la buse (16) par l'intermédiaire de laquelle la buse (16)la rotation du chariot d'impression et la rotation de l'organe moteur de lacet de la tuyère (31) et de l'organe rotatif angulaire (26) sont éjectées sous différents angles, **caractérisé en ce qu'**entre le chariot d'impression et le levier de bras (8) est disposée une structure de retournement comprenant un pignon planétaire (9) et un pignon de retournement (10) disposés sur le levier de bras (8). Disposé sur un chariot d'impression dans lequel le planétaire (9) engrène avec un pignon de rotation (10), la structure de rotation est reliée en communication avec le Contrôleur.

2. Dispositif d'impression 3D béton multifonctionnel selon la revendication 1, **caractérisé en ce que** l'organe de réglage angulaire est un palier à glissement sphérique.

3. Dispositif d'impression 3D béton multifonction selon la revendication 1, **caractérisé en ce que** la paroi latérale de la buse (16) est munie de façon fixe d'un altimètre relié en communication avec le Contrôleur.

4. Dispositif d'impression 3D béton multifonction selon la revendication 1, **caractérisé en ce que** le chariot d'impression comprend au moins deux traverses (15) et deux longerons (11) et est muni d'une caméra (18) et d'une buse (16); Les traverses (15) et les longerons (11) entourent trass; Les organes moteurs latéraux (13) sont disposés sur la traverse (15) et les organes moteurs longitudinaux sont disposés sur la traverse (11); La caméra (18) est disposée vers la direction d'injection de la buse (16) et le Contrôleur est connecté en communication avec la caméra (18); Pose de chenilles ou de glissières sur les traverses (15) et les longerons (11); L'organe de puissance transversal (13) et l'organe de puissance longitudinal sont respectivement reliés en communication avec le Contrôleur.

5. Dispositif d'impression 3D béton multifonction selon la revendication 1, **caractérisé en ce qu** 'il comprend une structure d'alimentation comprenant un réservoir en béton (5), une pompe de transfert (4) et une conduite d'alimentation (19), **en ce que** le réservoir en béton (5) et la pompe de transfert (4) sont disposés sur les côtés de la salle de commande (3); Une conduite d'alimentation (19) est prévue à la sortie de la pompe de refoulement (4), traverse la tige de bras (8) puis est reliée à la buse (16); Et la pompe de transfert (4) est reliée en communication avec le Contrôleur.

6. Dispositif d'impression 3D béton multifonction selon la revendication 5, **caractérisé en ce qu** 'il comprend en outre une structure motrice disposée dans la salle de commande (3) dos à une extrémité de la barre de bras (8), et une structure de marche (2) disposée sous la salle de commande, dans laquelle la Structure motrice comprend un actionneur (6) et une boîte de contrepoids (7); La structure de marche (2) est reliée en rotation à la salle de commande (3).

7. Dispositif d'impression 3D béton multifonction selon la revendication 6, **caractérisé en ce qu** 'il comprend un arbre de puissance de lacet de tuyère (32) entraîné en rotation dans un manchon d'arbre fixe (28) en lacet par l'organe de puissance de lacet de tuyère (31), **en ce que** l'arbre de puissance de lacet de tuyère (32) est solidaire du manchon mobile (29) en lacet, **en ce que** le manchon mobile (29) en lacet est solidaire du support de tuyère (30) et **en ce que** la tuyère est située sous le support de tuyère (30); L'arbre de puissance de lacet de tuyère (32) entraîne en rotation le support de tuyère (30) et la tuyère (16) en oscillation; Un organe angulaire rotatif (26) est fixé sur le fond de tuyère (25) par l'intermédiaire d'un support de fond de tuyère (24); La base de tuyère (25) entraîne la tuyère et le mécanisme associé en coulissement linéaire sur la traverse (15); Ledit organe rotatif angulaire (26) entraîne en rotation le support d'arbre rotatif (23) et la tuyère (16) sous le support d'arbre rotatif (23) Tout en entraînant en rotation l'arbre rotatif (27), réalisant ainsi le déplacement de la tuyère sur différentes dimensions.
